Europäisches Patentamt

European Patent Office

Office européen des brevets

(11) Publication number: **0 422 877 A2**

## EUROPEAN PATENT APPLICATION

(21) Application number: **90311015.3**

(22) Date of filing: **08.10.90**

(51) Int. Cl.⁵: **G06F 15/40**

(30) Priority: **13.10.89 US 421476**

(43) Date of publication of application:
**17.04.91 Bulletin 91/16**

(84) Designated Contracting States:
**DE FR GB**

(71) Applicant: **International Business Machines
Corporation
Old Orchard Road
Armonk, N.Y. 10504(US)**

(72) Inventor: **Horn, Gary Randall
12046 Lincolnshire
Austin, Texas 78758(US)**
Inventor: **Malkemus, Timothy Ray
1602 Rock Creek Drive
Round Rock, Texas 78681(US)**

(74) Representative: **Moss, Robert Douglas
IBM United Kingdom Limited Intellectual
Property Department Hursley Park
Winchester Hampshire SO21 2JN(GB)**

(54) A method for invalidating access plans in a database system.

(57) For each access plan **14, 16** in a database
system **10**, dependencies are determined for each
database object **20, 22** on which that access plan is
dependent. Each dependency has a type. When a
relationship changes between database objects, the
dependency types of each access plan for those
objects is determined. If an access plan has dependencies on the affected database objects which fall
within a preselected subset of dependency types,
that access plan is invalidated (and subsequently
recompiled). If the access plan dependencies are not
within the preselected subset of dependency types,
the plan remains valid and need not be recompiled.

Fig. 4

# A METHOD FOR INVALIDATING ACCESS PLANS IN A DATABASE SYSTEM

## Field of the Invention

The present invention relates generally to database systems for digital computers, and more specifically to a method for invalidating access plans therein to ensure referential integrity within the database during certain operations.

## Background of the Invention

In order to increase the speed of database access in digital computer systems, source files containing database access commands can be compiled into access plans. The access plans contain low level procedural statements to access databases efficiently. Instead of interpreting database access commands at run time in a database manager, the access plans are executed to improve system performance.

Numerous constraints must be satisfied when updating a database in order to maintain its referential integrity. Referential integrity refers to a state of consistency across the database. Procedural code to enforce these constraints can be included in the access plans. Each time the data base is updated, procedural code in the access plans performing such update is executed to perform all of the necessary consistency checks.

When a change is made in a relationship between two database objects, such as tables, the constraints which must be checked to ensure referential integrity must also be changed. This means that access plans which depend upon the changed relationship must be recompiled, also known as rebinding.

When an access plan is created, a table of all dependencies of that plan on other database objects is created. In current systems, if a changed relationship affects any of the database objects on which an access plan is dependent, that access plan is invalidated. Before an invalidated access plan can be executed, it must be recompiled. The process of recompilation will take into account the changed relationship. A change in a single relationship can possibly affect a large number of access plans, each of which must be recompiled prior to being executed in the future. Compilation of commands into access plans is a time consuming process, which is preferably avoided if possible.

## Disclosure of the Invention

Accordingly, the invention provides a method for identifying access plans as invalid in a database system, comprising the steps of:

if a relationship between a dependent and a parent object changes by dropping, or adding a foreign key in the dependent object for which the parent object has a primary key, determining for each access plan whether any procedural code within the access plan must be change; and

identifying as invalid all access plans for which any such procedural code must be changed.

Preferably the determining step comprises the steps of:

determining types of access plan dependencies on the dependent and parent objects; and

selecting access plans having dependencies on the parent and dependent objects which are within a preselected subset of all possible dependency types, wherein the procedural code within such selected access plans must be changed.

The possible dependency types comprise select, delete, insert, update, cascade, and key dependencies, and the preselected subset comprises:

when the foreign key is added, insert and update dependencies on the dependent object, and delete, update, and cascade dependencies on the parent objects; and

when the foreign key is dropped, insert dependency on the dependent table, delete and cascade dependencies on the parent table, combined update dependency on the parent table and key dependency on the dependent table, and combined update dependency on the dependent table and key dependency on the parent table.

The invention maintains the referential integrity of the database by efficiently determining which access plans are invalidated by changed referential constraints and which must therefore be modified in accordance with the changed referential constraints. Access plans which have been identified or marked as invalid are recompiled when they are next invoked. An advantage of the invention is that after a change in the relationship between two database objects, access plans are marked as invalid only if the procedural code within access plans to enforce referential constraints must be changed, and so access plans are only recompiled when necessary.

Thus, in accordance with the present invention, for each access plan in a database system, dependencies are determined for each database object on which that access plan is dependent. Each dependency has a type. When a relationship changes between database objects, the dependency types of each access plan for those objects is determined. If an access plan has dependencies on the affected database objects which fall within a preselected subset of dependency types, that access plan is invalidated. If the access plan dependencies are not within the preselected subset of dependency types, that plan remains valid and need not be recompiled.

In other words, the invention provides a method for maintaining referential integrity in a database when a relationship between two database objects is changed, comprising the steps of:
determining dependencies of access plans on the database objects;
comparing the determined dependencies to a preselected subset of all possible access plan dependency types, and if the determined dependencies of an access plan are within the preselected subset, marking such access plans as invalid.

The invention also provides base processing system including a relation database, said database including means for identifying access plans therein as invalid, said means comprising:
means for determining for each access plan whether any procedural code within the access plan must be changed if a relationship between a dependent object and a parent object changes by dropping or adding a foreign key in the dependent object for which the parent object has a primary key; and
means for identifying as invalid all access plans for which any such procedural code must be changed.

Brief Description of the Drawings

Figure 1 is a block diagram illustrating access plan dependencies within a database system;
Figure 2 is a diagram illustrating relationships between database objects;
Figure 3 is a table describing the dependency types of selected access plan statements on the objects of Figure 2;
Figure 4 is a flowchart illustrating operation of a method for checking access plan dependencies when a new foreign key is created; and
Figure 5 is a flowchart illustrating a method for checking access plan dependencies when a foreign key is dropped.

Detailed Description

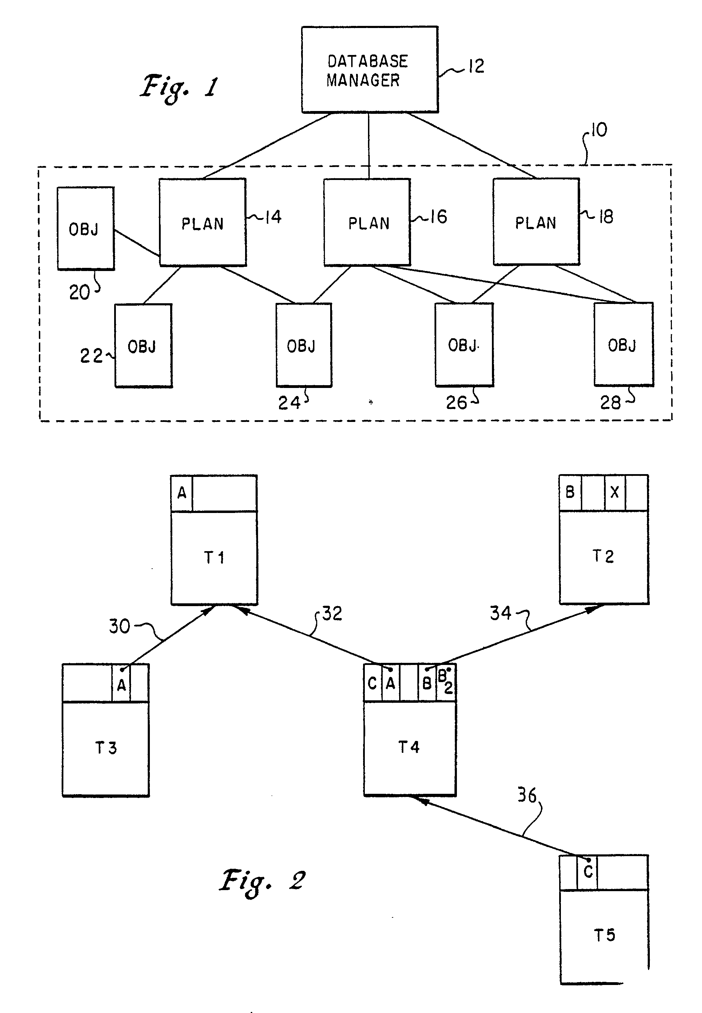

Figure 1 illustrated a portion of a database system which runs on a general purpose digital computer as known in the art. The system includes a database 10 and a database manager 12. The database 10 contains a plurality of various types of objects including data and other types of objects used to access data. The database manager 12 is called by application programs (not shown) to perform accesses of the database 10. All access to the database 10 is accomplished through the database manager 12.

Database 10 includes access plan objects 14, 16, 18 and data table objects 20, 22, 24, 26, 28. Additional objects and object types will be found in a typical database, but are not included here for purposes of clarity. Each of the access plan objects 14, 16, 18 corresponds to a single source file of high level database access commands which has been compiled into low level procedural statements. When an application program calls the database manager 12 to execute a series of database access commands, the database manager 12 invokes the appropriate access plan to accomplish those database accesses.

Data table objects 20 through 28 each represent a table of data consisting logically of rows and columns. Each row is a single entry, and is divided into fields corresponding to the columns of the table. As is known in the art, the data table objects 20 through 28 appear logically as a two dimensional array, but are typically implemented using various types of data structures such as B-trees.

Each access plan 14, 16, 18 has one or more data table objects which are affected by its execution. An access plan is said to be dependent on such data objects. The types of dependencies which may exist are described below in further detail. In database 10, plan 14 is dependent on data objects 20, 22, and 24. Plan 16 is dependent on objects 24, 26, and 28, while plan 18 is dependent on objects 26 and 28. In an actual system, the number of database objects on which an access plan is dependent may be quite large.

In order to ensure the accuracy and consistency of data contained in the database 10, the data must have a quality referred to as referential integrity. When the database is updated, referential integrity is ensured by enforcing restrictions on data changes called referential constraints. Some terminology necessary to understand the present invention will now be defined.

A primary key is a set of columns in a table that must contain unique non-null values. A table cannot have more than one primary key. A foreign key is a set of columns in a table whose values are required to match those of the primary key of a table. A referential constraint is a requirement that non-null values of a designated foreing key are valid only if they also appear as values of the primary key of the designated table. A relationship defined by a referential constraint is a set of connections between the rows of a single table or between the rows of two different tables determined by the values of a primary key and a foreign key.

A parent table is the table in a relationship containing the primary key that defines the relationship. A table can be a parent in an arbitrary number of relationships. A dependent table is a table in a relationship containing the foreign key that defines the relationship. A table can be a dependent in an arbitrary number of relationships. A table can be both a parent and a dependent.

A dependent row is a row of a dependent table that has a foreign key value which matches a primary key value of its parent table. The foreign key value thus represents a reference from the dependent row to a parent row. A parent row is a row of a parent table that has at least one dependent row.

A delete rule is associated with each referential constraint. The delete rule can restrict (prevent) the deletion of a parent row, or it may specify the effect of a deletion on the dependent rows. The effect can either be the deletion of the dependent rows (cascading of the delete), or the setting of the foreing key in the dependent rows to null.

An update rule is also associated with each referential constraint. One approach to handling update rules is to restrict the updating of a primary key in a parent row. Another approach is to specify the effect of an update on the dependent rows, so that, for example, cascading of updates would be possible.

**Figure 2** illustrates some of the concepts just described. Five data tables, T1, T2, T3, T4, and T5, are shown. Each table in **Figure 2** contains a row which illustrates a portion of the format for each row in that table. For example, each row in table T1 includes a column, or group of columns, which forms a key A. Each row of table T4 includes keys A, C, and B.

Tables T1, T2, and T4 contain primary keys. Table T1 contains primary key A, T2 contains primary key B, and T4 contains primary key C. Tables T3, T4, and T5 contain foreign keys. Both T3 and T4 contain key A as a foreign key. T4 also includes key B s a foreign key. Table T5 contains key C as a foreign key.

Relations between the tables are indicated by the arrows. Arrow **30** represents the relationship between foreign key A of table T3 and primary key A of T1. Arrow **32** represents the relationship between foreign key A of table T4 and primary key A of table T1. Arrow **34** represents the relationship between foreign key B of table T4 and primary key B of T2, and arrow **36** represents the relationship between foreign key C in table T5 and primary key C in T4.

The referential constraints which define relationships **30-36** require consistency between entries stored in related tables. For example, the C key for each row of table T5 must match a C key in some row of T4, or else contain the·value null. In a similar manner, each row of T4 must be consistent with both tables T1 and T2. That is, each row in T4 must have an A key which matches an A key in T1, and also a B key which matches a B key in table T2. If a null value is allowed for some foreign key, a value of null for that key satisfies that referential constraint.

Each time a change is made to the database, all relevant referential constraints must be satisfied. If any are not, the change is not allowed. Enforcement of the following rules for foreign keys ensures referential integrity of the database:

Insert Rule: When a row is inserted into a dependent table, each non-null foreign key value in the inserted row must match some value of the primary key of the parent table of the relationship. If any referential constraint is violated by an insert operation, an error occurs and no rows are inserted.

Delete Rules: When a row is deleted from a parent table, a check is performed to determine whether there are any dependent rows in the dependent table. A dependent row is one which has a foreign key value which matches the primary key of the row to be deleted. If any dependent rows are found, the action takes is prescribed by a delete rule specified for the foreign key in the dependent table.

Three delete rules can be specified for a foreign key. If the rule is RESTRICT, if any dependent rows are found, an error occurs and no rows are deleted. If the delete rule is CASCADE, any dependent rows in the dependent table are deleted. Any other referential constraints on the deleted rows of the dependent table must also be satisfied, or an error occurs and no rows are deleted. For a delete rule of SET NULL, if any dependent rows are found in the dependent table, all nullable parts of the foreign key are set to null.

Update Rule: As described above, at least two alternative update rules exist. One approach is to specify the effects of update on the dependent rows. Another approach is for the update rule to state that when a primary key is updated in a parent table, a check is performed to determine whether there are any dependent rows in the dependent table. If any dependent rows are found, an error occurs and no rows are updated.

Update foreign key rule: When a foreign key is updated in a dependent table, if the foreign key is not null its new value must match some value of the primary key of the parent table of the relationship. If any referential constraint is violated by the update operation, an error occurs and no rows are updated.

It is now possible to describe the access plan dependencies referred to in connection with **Figure 1**. A table is involved in an access plan operation if it or any of its indexes are accessed in that operation. It is not necessary that a table involved in an operation be directly referenced by the database access command of the operation. An access plan is dependent on all database objects that are involved in its operations, even if they are involved solely for the enforcement of referential constraints. Access plan dependencies are recorded for all tables directly referenced in an insert, update, delete, or select statement and in two special cases.

For purposes of the preferred embodiment, six different types of access plan dependencies may exist. Four of these dependency types are applied to tables which are directly referenced in database access statements which directly affect the table. These dependency types are select, insert, update, and delete. Two additional types of access plan dependencies are also defined. Whenever a table is involved because of an update of a primary key or a foreign key, a key dependency exists. Whenever a table is involved because deletes cascade to that table, a cascade dependency exists.

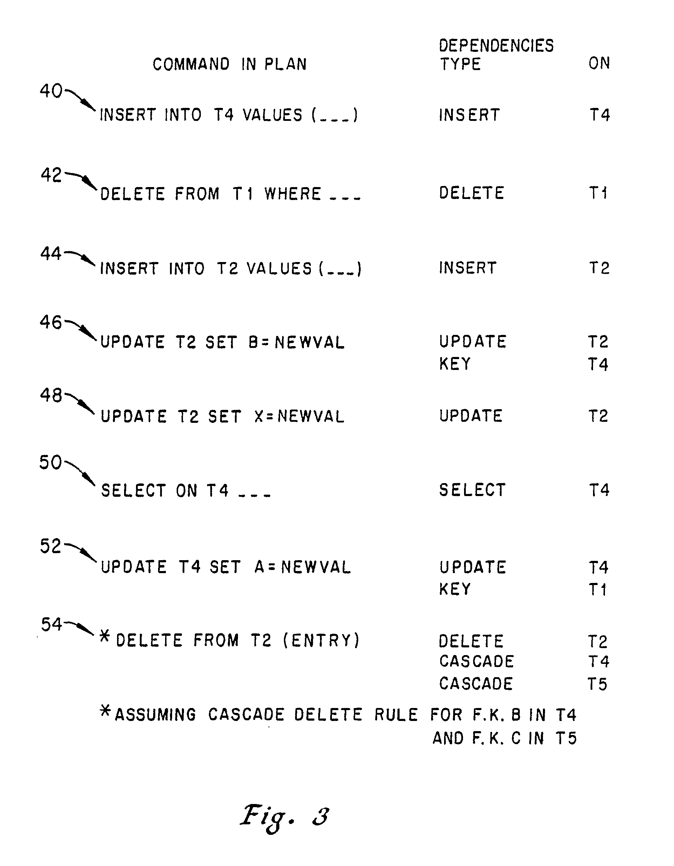

**Figure 3** illustrates a number of access plan dependencies which can occur with the data tables and constraints defined in **Figure 2**. **Figure 3** is a table containing a number of different high level database access commands, and indicates the types of access plan dependencies caused by each command and the tables on which the dependencies occur.

Command **40** is a high level command to insert a row into table T4. This command, contained within an access plan, generates an insert dependency on table T4. When a new row is inserted into table T4, the A and B keys must be checked against the entries of tables T1 and T2, respectively, to ensure that matching entries are found therein.

Command **42** indicates that an entry is to be deleted from Table T1. This command generates a delete dependency on T1. This dependency assumes that the delete rules for foreign key A in tables T3 and T4 are either RESTRICT or SET NULL. An example illustrating the appropriate dependencies when the delete rule is CASCADE is described below.

Command **44** inserts a new row into table T2. This generates an insert dependency on table T2.

Command **46** updates a row in table T2. Command **46** changes the value of the B key in the row to a new value. This generates an update dependency on table T2. Since key B is a primary key, a key dependency is generated for any tables which have a foreign key B. In this case, table T4 is the only such table.

Command **48** updates a different field of table T2 to a new value. This generates an update dependency on table T2. Since this other field is neither a primary key nor a foreign key, no key dependencies are generated.

Command **50** is used to select one or more rows from table T4. This generates a select dependency on T4.

Command **52** is used to update a row of table T4, setting the field of the A key to a new value. This generates an update dependency on table T4. Since key A is a foreign key, a key dependency is generated for the parent table of the A relationship, table T1 in this case.

Command **54** illustrates the dependencies which occur when a CASCADE delete rule is used. Assume the delete rule for foreign key B in table T4 is CASCADE, and the delete rule for foreign key C in table T5 is also CASCADE. In this instance, command **54** generates a delete dependency on table T2, and cascade dependencies on tables T4 and T5.

Relations between tables change whenever a new foreign key is created in a table, or whenever an existing foreign key is dropped from a table. The table in which the new foreign key is created or from which it is dropped, can be referred to as the "object" table. In previous systems, whenever a new foreign key is added or an existing foreign key dropped, all access plans having a dependency on the object table are invalidated and must be recompiled before they can be executed. With the designation of different dependency types as described above, it is possible to determine which access plans having a dependency on the object table are actually affected by the newly created or dropped foreign key. Access plans which are not actually affected by such foreign key do not need to be recompiled, and are therefore not invalidated.

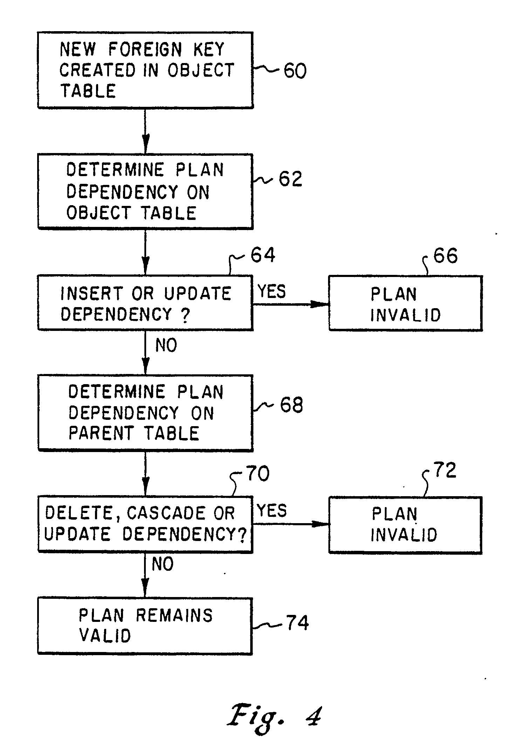

**Figure 4** is a flowchart illustrating a sequence of steps which can be use to determine which access plans must be invalidated when a new foreign key is created. In step **60**, a new foreign key is created in the object table. The remaining steps of **Figure 4** are performed for each access plan which has a dependency on the object table, or the parent table in the new referential constraint.

The dependency of an access plan on the object table is determined in step **62**. If that dependency is an insert or an update dependency **64**, the access plan is marked as invalid **66** and must be recompiled before execution. If the dependency on the object table is not an insert or update dependency **64**, the dependency of the access plan on the parent table for the newly created key is determined **68**. If the dependency of the access plan on the parent table is a delete, cascade, or update dependency **70**, the access plan is invalid **72**. If the dependency on the parent table is not a delete, cascade, or update dependency **70**, the access plan remains valid **74** and need not be recompiled.

It is not required that the dependency checks made when a new foreign key is created be performed in exactly the order set forth in **Figure 4**. It is only necessary that the same sets of dependencies cause invalidation of the access plan. Thus, whenever a new foreign key is created, an access plan must be invalidated if it has either 1) an insert or update dependency on the object table, or 2) a delete, update, or cascade dependency on the parent table of the newly created foreign key.

Application of the access plan dependency rules set forth in **Figure 4** will now be described in connection with examples of **Figure 3**. For purposes of these examples, it will be assumed that table T4 is the object table, and foreign key B2 is the key which has been newly created in table T4, referring B in T2.

For command **40**, an access plan has an insert dependency on table T4. This requires that the access plan be invalidated. When the access plan is recompiled, it will be necessary for the compiler to insert additional code into the access plan for checking the referential constraint between table T4 and table T2. This code did not exist previously, since there was previously no relationship between these two tables.

Command **42** generates no dependency on table T2 or T4. Therefore, command **42** does not cause invalidation of the access plan.

Command **44** generates an insert dependency on table T2, and no dependency on table T4. Since an insert dependency on the parent table is not one of the dependency types which invalidates a plan, command **44** does not require invalidation of the access plan. Both commands **46** and **48** generate update dependencies on parent table T2, which require invalidation of the access plan.

Command **50** generates a select dependency on type T4, which does not invalidate the access plan. Command **52** generates an update on table T4, which does not invalidate the access plan. Command **54** generates a delete dependency on table T2 and a cascade dependency on table T4. The delete dependency on parent table T2 requires invalidation of the plan.

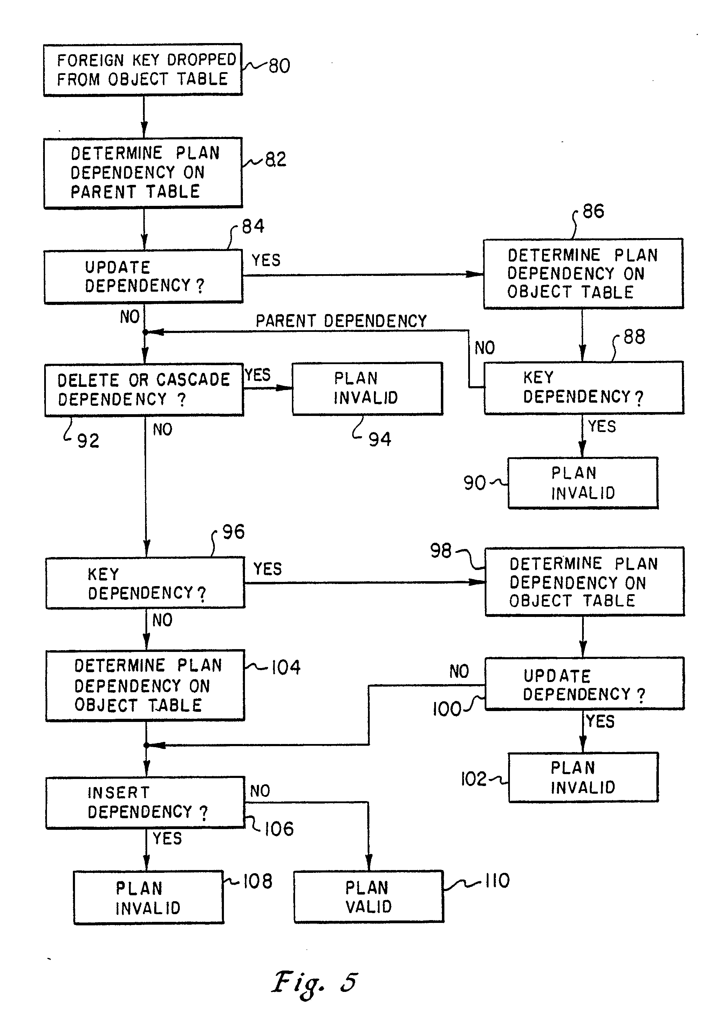

The flowchart of **Figure 5** indicates the dependencies which must be checked to determine whether an access plan should be invalidated after a foreign key has been dropped from the object table. As was the case with **Figure 4**, it is not important in which order the various dependency checks are made. It is, however, important that the correct subset of all possible dependency relationships be used to invalidate an access plan.

Step **80** indicates that an existing foreign key is dropped from the object table. For each dependent access plan, the access plan dependency on the parent table for the just deleted foreign key is determined **82**. If the plan has an update dependency on the parent table **84**, the plan dependency on the object table is then determined **86**. If the object table dependency is a key dependency **88**, the plan is marked as invalid **90**. If not, additional checks are made.

If the dependency on the parent table was not an update dependency **84**, or if it was and the dependency on the object table is not a key dependency **88**, a check is made to see if the access plan has a delete or cascade dependency on the parent table **92**. If so, the plan is invalid **94**. If not, a check is made to see if the plan has a key dependency on the parent table **96**. If so, the dependency of the access plan on the object table is determined **98**. If the plan has an update dependency on the object table **100**, it is marked as invalid **102**.

If the NO branch was taken from step **96**, the dependency of the access plan on the object table is determined **104**. The test of step **106** is performed either after step **104** or **100** as the case may be. In step **106** a check is made to determine whether the access plan has an insert dependency on the object table. If so, the plan is marked as invalid **108**. If non of the dependency combinations already checked for are true, the plan remains valid **110**.

In summary, whenever an existing foreign key is dropped, an access plan must be invalided if it has any of: 1) an update dependency on the parent table for the just dropped foreign key and a key dependency on the object table; 2) an insert dependency on the object table; 3) an update dependency on the object table and a key dependency on the parent table for the just dropped foreign key; or 4) a delete or a cascade dependency on the parent table for the just dropped foreign key. If an access plan has none of the dependencies just described, it need not be invalidated when the foreign key is dropped.

Application of the access plan dependency rule set forth in **Figure 5** will now be described in connection with the examples of **Figure 3**. For these examples, it will be assumed that table T4 is the object table, and that foreign key B is being dropped from table T4.

For command **40**, an access plan has an insert dependency on table T4. This requires that the access plan be invalidated. The code included in the access plan which performed constraint checking on the B key relationship is no longer valid or necessary, and will be omitted upon recompilation.

Command **42** generates no dependency on table T2 or T4. Therefore, command **42** does not cause invalidation of the access plan.

Command **44** generates an insert dependency on table T2, and no dependency on table T4. This does not require invalidation of the access plan.

Command **46** generates an update dependency on table T2 and a key dependency on table T4. This causes the access plan to be invalidated. Command **48**, which generates only an update dependency on table T2, does not invalidate the plan since there is no key dependency on table T4.

Command **50** generates a select dependency on table T4, which does not invalidate the access plan. Command **52** generates an update dependency on table T4, but no dependency on table T2. This does not invalidate the plan. Command **54** generates a delete dependency on table T2, and a cascade dependency on table T4. This requires invalidation of the access plan.

As described above, adding or dropping a foreign key requires invalidating an access plan when the access plan has certain types of dependencies on the object table and the parent table for that foreign key. The dependencies which cause invalidation of an access plan are a subset of all of the possible types of dependencies which the access plan can have on the object table and the parent table. Dependency types which are not included in this subset do not required invalidation of the access plan. Thus, in many cases, adding or dropping a foreign key will not require invalidation of all of the access plans which depend on the table containing such key.

The process for checking types of dependencies when a foreign key is dropped or created can be made very efficient. The access plan dependencies on objects in the database can be stored as bit maps. A straightforward check of the bit map for each access plan will indicate whether that access plan needs to be invalidated. Since dependency checks can be made efficiently, the small amount of extra time involved in making these checks is outweighed by the time saved by not recompiling access plans when such recompilation is unnecessary.

## Claims

1. A method for identifying access plans (**14**) as invalid in a database system (**10**), characterised by comprising the steps of:
   if a relationship between a dependent and parent object changes by dropping (**80**) or adding (**60**) a foreign key in the dependent object for which the parent object has a primary key, determining for each access plan whether any procedural code within the access plan must be changed; and
   identifying as invalid all access plans for which any such procedural code must be changed.

2. The method of Claim 1, wherein said determining step comprises the steps of:
   determining types of access plan dependencies (**62, 68**) on the dependent and parent objects; and
   selecting access plans having dependencies on the parent and dependent objects which are within a preselected subset of all possible dependency types, wherein the procedural code within such selected access plans must be changed.

3. The method of Claim 2, wherein the possible dependency types comprises select, delete, insert, update, cascade, and key dependencies.

4. The method of Claim 3, wherein the preselected subset comprises:
   when the foreign key is added (**60**), insert and update dependencies on the dependent object, and delete, update, and cascade dependencies on the parent objects; and
   when the foreign key is dropped (**80**), insert dependency on the dependent table, delete and cascade dependencies on the parent table, combined update dependency on the parent table and key dependency on the dependent table, and combined update dependency on the dependent table and key dependency on the parent table.

5. A method for maintaining referential integrity in a database comprising the steps of:
   identifying the access plan as invalid, according to the method of any preceding claim;
   and further comprising the step of:
   recompiling an access plan when it is next accessed if such a plan has been identified as invalid.

6. A data processing system including a relational database, said database including means for identifying access plans therein as invalid, said means comprising:
   means for determining for each access plan whether any procedural code within the access plan must be changed if a relationship between a dependent and a parent object changes by dropping or adding a foreign key in the dependent object for which the parent object has a primary key; and
   means for identifying as invalid all access plans for which any such procedural code must be changed.

Fig. 1

Fig. 2

| COMMAND IN PLAN | DEPENDENCIES TYPE | ON |
|---|---|---|
| 40 INSERT INTO T4 VALUES (___) | INSERT | T4 |
| 42 DELETE FROM T1 WHERE ___ | DELETE | T1 |
| 44 INSERT INTO T2 VALUES (___) | INSERT | T2 |
| 46 UPDATE T2 SET B=NEWVAL | UPDATE KEY | T2 T4 |
| 48 UPDATE T2 SET X=NEWVAL | UPDATE | T2 |
| 50 SELECT ON T4 ___ | SELECT | T4 |
| 52 UPDATE T4 SET A=NEWVAL | UPDATE KEY | T4 T1 |
| 54 *DELETE FROM T2 (ENTRY) | DELETE CASCADE CASCADE | T2 T4 T5 |

*ASSUMING CASCADE DELETE RULE FOR F.K. B IN T4
AND F.K. C IN T5

# Fig. 3

```
┌─────────────────────┐
│ NEW FOREIGN KEY     │
│ CREATED IN OBJECT   │~60
│ TABLE               │
└─────────────────────┘
          │
          ▼
┌─────────────────────┐
│ DETERMINE PLAN      │
│ DEPENDENCY ON       │~62
│ OBJECT TABLE        │
└─────────────────────┘
          │
          ▼          ~64                    ┌─────────────┐
┌─────────────────────┐  YES               │ PLAN        │~66
│ INSERT OR UPDATE    │──────────────────▶ │ INVALID     │
│ DEPENDENCY ?        │                    └─────────────┘
└─────────────────────┘
          │ NO
          ▼
┌─────────────────────┐
│ DETERMINE PLAN      │
│ DEPENDENCY ON       │~68
│ PARENT TABLE        │
└─────────────────────┘
          │          ~70
          ▼                                 ┌─────────────┐
┌─────────────────────┐  YES               │ PLAN        │~72
│ DELETE, CASCADE OR  │──────────────────▶ │ INVALID     │
│ UPDATE DEPENDENCY?  │                    └─────────────┘
└─────────────────────┘
          │ NO
          ▼
┌─────────────────────┐
│ PLAN REMAINS        │~74
│ VALID               │
└─────────────────────┘
```

*Fig. 4*

*Fig. 5*